# EUROPÄISCHE PATENTSCHRIFT

(11) **EP 3 584 430 B1**
(45) Veröffentlichungstag und Bekanntmachung des Hinweises auf die Patenterteilung: **25.02.2026**
(21) Anmeldenummer: 19180172.9
(22) Anmeldetag: 14.06.2019
(51) Int. Cl.: F02D 41/40, F02P 5/15, F02D 37/02

(54) **TRIEBWERKSCHUTZFUNKTION BEI HOHEN DREHZAHLGRADIENTEN**
ENGINE SAFETY FUNCTION AT HIGH SPEED GRADIENTS
FONCTION DE PROTECTION DU MOTEUR À UN GRADIENT DE VITESSE DE ROTATION ÉLEVÉ

(30) Priorität: 19.06.2018 DE 102018114688
(43) Veröffentlichungstag der Anmeldung: 25.12.2019
(73) Patentinhaber: Volkswagen AG, 38440 Wolfsburg (DE)
(72) Erfinder: Töppel, Johannes, 38116 Braunschweig (DE); Halfpaap, Josef, 39114 Magdeburg (DE)
(74) Vertreter: Gulde & Partner

(56) Entgegenhaltungen:
- WO-A1-2009/093112
- DE-A1- 10 332 350
- DE-A1- 102005 014 920
- GB-A- 2 314 944
- US-A1- 2004 112 336
- US-A1- 2016 195 055

## Beschreibung

Die Erfindung betrifft ein Verfahren zum Betreiben einer Verbrennungskraftmaschine (Triebwerk) eines Kraftfahrzeuges, bei dem Kraftstoff in einen Brennraum eines von mehreren betrachteten Zylindern in Abhängigkeit eines vorgebbaren Sollwinkels eines rotierenden Bauteils der Verbrennungskraftmaschine, der mit dem Kurbelwinkel einer Kurbelwelle der Verbrennungskraftmaschine korrespondiert, zu einem Zeitpunkt gezündet und/oder eingespritzt wird, wobei ein Zünd- und/oder Einspritz-Zeitpunkt zu einem spätesten Festlegungs-Zeitpunkt unter Kenntnis über den Sollwinkel und der aktuellen Drehzahl zum Festlegungs-Zeitpunkt des einen der mehreren Zylinder festgelegt wird.

Als Klopfen ist eine unkontrollierte Verbrennung oder eine Selbstentzündung des Kraftstoffs bei Ottomotoren bekannt. Temperatur und Druck steigen schlagartig an, eine Druckwelle breitet sich mit Überschallgeschwindigkeit im Brennraum aus und trifft auf dessen Wände. Es treten Druckspitzen auf, die Kolben, Lager, Zylinderkopf, Ventile und Zündkerze beschädigen können. Durch Reflexion kommt es zu einer hochfrequenten Schwingung im Zylinderdruckverlauf, welche als sogenanntes Klopfen hörbar ist.

Die unkontrollierte Selbstzündung des Luft-Kraftstoffgemisches kann aus folgenden Gründen erfolgen: Eine zu hohe Verdichtung des Gemisches; zu hohe Temperaturen der Zylinderinnenwand (bei hohen Motorleistungen), glühender Abbrand (Verbrennungs- und Ölrückstände) an den Brennraumwänden; zu früher Zündzeitpunkt (ältere, einstellbare Zündsysteme); Kraftstoff mit zu niedriger Oktanzahl (Kennzahl für die Klopffestigkeit); hohe Temperaturen in den Außenbereichen des Zylinders durch die Strahlungsenergie der bereits entzündeten Flammfront, die jedoch die Außenbereiche noch nicht erreicht hat; ungünstige verschachtelte Brennraumform ohne Turbulenz (begünstigt die Entstehung von Wärmenestern) des Luft-Kraftstoff-Gemisches; Schmierölpartikel, die aus den Kurbelraumgasen in das Luft-Kraftstoff-Gemisch gelangen können; falscher Wärmewert der Zündkerze, sodass sie entweder zu heiß und dadurch selbst zum Glühzünder wird oder dass sie zu kalt bleibt, um Rückstände (Verkokungen) abzubrennen, die ihrerseits wieder eine Glühzündung auslösen.

Ein weiterer Fall, bei dem eine Druckwelle im Sinne des Klopfens ausgelöst werden kann, tritt beim Vorliegen hoher Drehzahlgradienten auf. Diese hohen Drehzahlgradienten treten beispielsweise bei hektischen Schaltvorgängen von mit Handschaltgetrieben versehenen Verbrennungskraftmaschinen auf. In diesen Verbrennungskraftmaschinen kann es im Brennraum aufgrund eines system-/ und prinzipbedingten Einspritztimingfehlers zu verfrühten Einspritz- und Zündereignissen kommen. Diese führen aufgrund der frühzeitig einsetzenden Verbrennung mit starken Druckgradienten zu enormen Spitzendrucküberschreitungen (Druckwellen im Brennraum). Diese Spitzendrucküberschreitungen können analog zu dem erläuterten Klopfen Bauteile, wie Zylinderkopf, Zylinderlaufbuchse, Kurbelgehäuse, Zylinderkopfdichtung und weitere Bauteile in diesem Bereich schädigen.

Die Spitzendrucküberschreitungen, welche die Aggregate beziehungsweise Bauteile eines sogenannten Triebwerks schädigen, können während des Motorbetriebs erkannt und verhindert werden, indem durch eine Drehzahlanalyse im Motorsteuergerät mit entsprechender Drehzahl-Gradientenüberwachung im geeigneten Messraster kritische Situationen erkannt werden, wonach durch eine entsprechende Maßnahme eine Schädigung der Teile vermieden werden kann.

Die Drehzahl-Gradientenüberwachung zur Vermeidung klopfender Verbrennung ist aus der Druckschrift DE 102 60 012 B4 und zur Vermeidung von sogenanntem Ruckeln beziehungsweise der Laufruhe der Verbrennungskraftmaschine ist aus der Druckschrift DE 198 13 337 A1 bekannt. In der WO 2009/093112 A1 wird ein Kraftstoffeinspritzsteuerungssystem für Verbrennungsmotoren mit elektronischer Steuereinheit offenbart, die die erforderliche Anzahl von Einspritzvorgängen und die erforderlichen Einspritzzeiten neu berechnet und die Kraftstoffeinspritzung steuert, wenn sich die Motordrehzahl schnell ändert.

Als Maßnahme/n zur Vermeidung von zu hohen Drehzahl-Gradienten der Verbrennungskraftmaschine sind beispielsweise vorgesehen, eine Spätverschiebung der Einspritzungen/Zündungen und/oder einer Deaktivierung von Einspritzereignissen/Zündungen und/oder eine Reduktion von Einspritzmengen (bei Direkteinspritzern) und/oder eine schnelle Reduzierung des Kraftstoffdrucks über ein Druckregelventil für den Fall, dass die Einspritzung schon begonnen hat.

Als Stand der Technik werden ferner die Druckschrift DE 103 32 350 A1 und US 2016/ 195 055A1 sowie DE 10 2005 014 920 A1 genannt. Es wird ferner auf die Druckschriften GB 2 314 944 A und US 2004/ 112 336 A1 hingewiesen.

Der Erfindung liegt die Aufgabe zugrunde, eine Spitzendrucküberschreitung einer Brennkammer einer Verbrennungskraftmaschine, die insbesondere bei hohen Drehzahlgradienten auftritt, zu verhindern.

Die Erfindung wird durch die Merkmale des Anspruch 1 und der Ansprüche 5 und 6 gelöst.

In bevorzugter Ausgestaltung der Erfindung ist vorgesehen, die Korrektur des Zünd- und/oder Einspritz-Zeitpunktes in unter Beibehaltung des vorgegebenen Sollwinkels nach der Aktivschaltung der Schutzfunktion mittels eines Kennfeldes, neben der Abhängigkeit von der Drehzahl mittels des negativen Drehzahlgradienten, zudem in Abhängigkeit eines Lastpunktes der Verbrennungskraftmaschine und/oder in Abhängigkeit eines Ladedrucks eines Abgasturboladers und/oder in Abhängigkeit einer Einspritzmenge und/oder eines Sollmomentes der Verbrennungskraftmaschine und/oder in Abhängigkeit einer Abgasrückführungs (AGR)-Rate einer Abgasrückführung und/oder in Abhängigkeit einer Betriebsart der Verbrennungskraftmaschine vorgenommen wird. Hierdurch werden in vorteilhafter Weise noch weitere Parameter in das Kennfeld integriert, wodurch eine Korrektur des Zünd- und/oder Einspritz-Zeitpunktes unter Beibehaltung des Sollwinkels auch bei großen Drehzahländerungen noch adaptiver möglich ist, mithin unter Berücksichtigung der genannten Parameter besser anpassbar ist.

Im Detail zeichnet sich das Verfahren bevorzugt dadurch aus, dass in Abhängigkeit der Drehzahl zum spätesten Festlegungs-Zeitpunkt und des Differenzbetrages der Drehzahlen spätesten Festlegungs-Zeitpunkt und zu dem vor dem spätesten Festlegungs-Zeitpunkt liegenden Zeitpunkt in einem dafür in der Steuerung abgelegten Kennfeld ein Korrekturwert zur Verfügung gestellt wird, der als "Offset"-Zeitraum ausgebildet wird.

Dieser "Offset"-Zeitraum wird im Fall der Aktivschaltung der Schutzfunktion einem unkorrigierten Zeitraum additiv hinzugefügt, wobei dieser unkorrigierte Zeitraum der sich stark verändernden, abgefallenen Drehzahl zum spätesten Festlegungs-Zeitpunkt entspricht, sodass ausgehend von dem spätesten Festlegungs-Zeitpunkt nach Addition der Zeiträume der korrigierte Zünd- und/oder Einspritz-Zeitpunkt berechnet wird, in dem die Zündung oder Einspritzung vorgenommen wird, sodass trotz der Drehzahländerung der derjenige vorgegebene Sollwinkel beibehalten wird, der auch ohne Aktivschaltung der Schutzfunktion zum unkorrigierten Zünd- und/oder Einspritz-Zeitpunkt (ohne Aktivschaltung der Schutzfunktion) erreicht wird.

In weiteren Ausführungsvarianten ist vorgesehen, dass bei einer Aktivschaltung der Schutzfunktion zusätzlich einzelne Zündungen oder Einspritzereignisse deaktiviert werden und/oder Einspritzmengen reduziert werden und/oder eine Reduzierung des Kraftstoffdrucks über ein Druckregelventil innerhalb eines Zünd- und/oder Einspritzsystems vorgenommen wird, wenn die Einspritzung bereits begonnen hat. Hierdurch kann in vorteilhafter Weise in Kombination mit der korrigierten Zünd- und/oder Einspritz-Zeitpunktberechnung durch die eine signifikante Drehzahländerung nicht zu einer Veränderung des vorgegebenen Sollwinkels und somit nicht zu einem großen Druckaufbau führt, zusätzlich dafür gesorgt werden, dass Druckspitzen in den Brennkammern abgebaut werden.

Die Erfindung betrifft nach Anspruch 5 auch ein Motor-Steuergerät eines Zünd- und/oder Einspritzsystems in dem ein computerlesbarer Programmalgorithmus zur Ausführung des Verfahrens nach den Ansprüchen 1 bis 4 gespeichert ist. Ein erfindungsgemäßes Kraftfahrzeug weist nach Anspruch 6 ein Motor-Steuergerät gemäß Anspruch 5 auf.

Die Erfindung wird nachfolgend anhand der zugehörigen Figuren erläutert. Es zeigen:

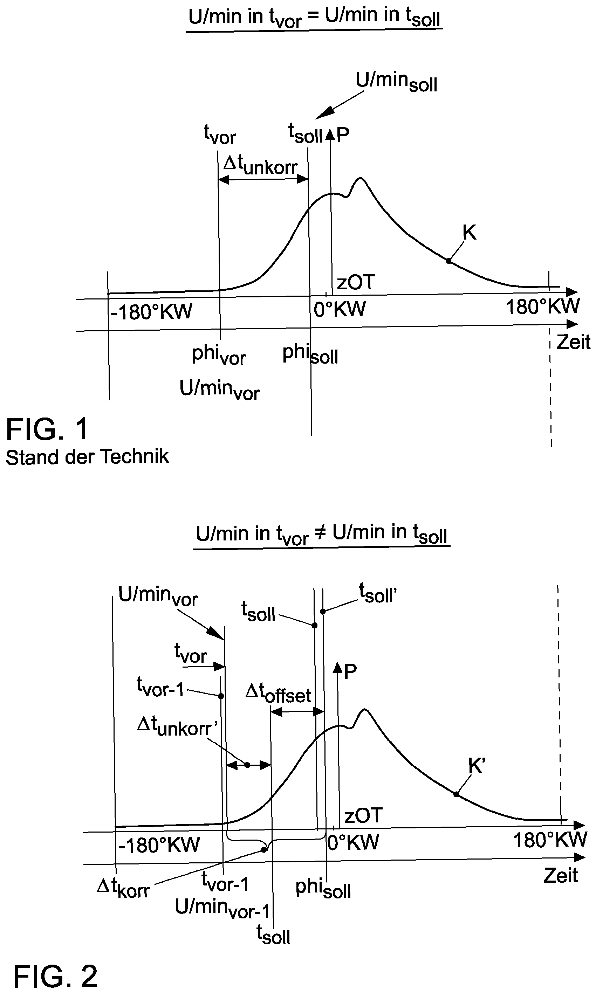

- Figur 1: ein Diagramm zur Darstellung eines zeitlichen Ablaufes eines Einspritz- oder Zündvorganges in einem Zylinder einer mehrere Zylinder aufweisenden Verbrennungskraftmaschine nach dem Stand der Technik, welches eine erste Abszissenachse zur Darstellung des Kurbelwinkels KW und auf der Ordinatenachse einen zugehörigen Druckverlauf p innerhalb des einen Zylinders anhand einer Druck-Kennlinie verdeutlicht, wobei der ersten Abszissenachse eine zweite Abszissenachse zugeordnet ist, welche die Zeit t und die relevanten Zeitpunkte tᵥₒᵣ und tₛₒₗₗ in Abhängigkeit eines vorgegebenen Sollwinkels phiₛₒₗₗ zum Zeitpunkt tₛₒₗₗ verdeutlicht, und
- Figur 2: ein Diagramm zur Darstellung eines zeitlichen Ablaufes eines Einspritz- oder Zündvorganges in dem einem Zylinder einer mehrere Zylinder aufweisenden Verbrennungskraftmaschine gemäß der Erfindung, welches analog zu der Figur 1 die erste Abszissenachse zur Darstellung des Kurbelwinkels °KW und auf der Ordinatenachse den zugehörigen Druckverlauf p innerhalb des ersten Zylinders anhand einer Druck-Kennlinie K' verdeutlicht, wobei der ersten Abszissenachse analog zu Figur 1 die zweite Abszissenachse zugeordnet ist, welche die Zeit t und die relevanten Zeitpunkte tᵥₒᵣ₋₁, tᵥₒᵣ und t_{soll'} in Abhängigkeit eines vorgegebenen Sollwinkels phiₛₒₗₗ zum Zeitpunkt t_{soll'} verdeutlicht.

Es besteht system-/ und prinzipbedingt bei der Zündung oder Einspritzung von Kraftstoff ein Nachteil darin, dass innerhalb der Steuerung des Einspritzsystems zum Zeitpunkt der Zündung von Otto-Motoren oder der Einspritzung von Diesel-Motoren die exakte Drehzahl U/min und damit verbunden die Drehzahl U/min zum Zünd-Zeitpunkt tₛₒₗₗ oder zum Einspritz-Zeitpunkt tₛₒₗₗ (vergleiche Figur 1) als Parameter nicht hinzugezogen wird.

Das liegt daran, dass im Gesamtsystem systemabhängig bei der Zündung oder Einspritzung von Kraftstoff zum Zeitpunkt tₛₒₗₗ bauteilseitig und steuerungsseitig zwischen einem Festlegungs-Zeitpunkt tᵥₒᵣ und dem Zeitpunkt tₛₒₗₗ immanent physikalische Verzugszeiten auftreten.

Es liegt in Abhängigkeit des Brennverfahrens im Motorsteuergerät beispielsweise mindestens eine Verzugszeit, wie zum Beispiel ein Injektor-Öffnungsverzug, ein Verzug bei der Gemischbildung, ein Brennbeginnverzug, ein Zeitverzug durch die Berechnungszeit des Zeitpunktes des Einspritzzeitpunktes tₛₒₗₗ vor.

Unter dem Festlegungs-Zeitpunkt tᵥₒᵣ wird der Spätest-Zeitpunkt unter Kenntnis über den Sollwinkel phiᵥₒᵣ, insbesondere Kurbelwinkel zum Festlegungs-Zeitpunkt tᵥₒᵣ und der aktuellen Drehzahl U/min zum Festlegungs-Zeitpunkt tᵥₒᵣ eines betrachteten Zylinders Z verstanden, in dem systembedingt spätestens eine Berechnung des Zeitpunktes tₛₒₗₗ abgeschlossen und festgelegt werden muss.

Ein Beispiel: Zur Berücksichtigung der immanent physikalisch bedingten Verzugszeiten wird bisher, wie nachfolgend anhand einer der möglichen Verzugszeiten erläutert wird, beispielsweise derart vorgegangen.

Die elektrische Bestromung eines Aktors zum Einspritzzeitpunkt tₛₒₗₗ, insbesondere eines Kraftstoff einspritzenden Injektors in einem Zylinder Z der mehreren Zylinder Zₙ, die beispielsweise vor dem oberen Totpunkt OT [0°KW ] bei einem festgelegten vorgebbaren Sollwinkel phiₛₒₗₗ erfolgen (vergleiche Figuren 1 und 2) soll, muss weit vor diesem Einspritzzeitpunkt tₛₒₗₗ, nämlich zum vorangehenden Festlegungs-Zeitpunkt tᵥₒᵣ festgelegt werden.

Mit anderen Worten, Motorsteuerungen von Verbrennungskraftmaschinen müssen in der Praxis aufgrund der Verzugszeiten behafteten Laufzeiten der Aggregate und zugehörigen Berechnungen sowie der Laufzeiten der Programmschritte der Programmierung der Endstufen so konzipiert sein, dass die Festlegung des Zeitpunktes tₛₒₗₗ systemabhängig in dem früher liegenden Festlegungs-Zeitpunkt tᵥₒᵣ erfolgt.

Zum Festlegungs-Zeitpunkt tᵥₒᵣ wird in der Praxis mit Kenntnis der aktuell gemessenen Drehzahl U/min zum Festlegungs-Zeitpunkt tᵥₒᵣ, gegebenenfalls unter Verwendung eines Drehzahlmodells und der Kenntnis über den Sollwinkel phiᵥₒᵣ, insbesondere Kurbelwinkel, der Einspritzzeitpunkt tₛₒₗₗ der Endstufe für die Zündung oder Einspritzung von tᵥₒᵣ ausgehend - ohne weiteren Bezug auf den Sollwinkel phiₛₒₗₗ zum Zeitpunkt tₛₒₗₗ - festgelegt, mithin programmiert.

Dabei kommt es in nachteiliger Weise bei einer Drehzahländerung zwischen den Zeitpunkten tᵥₒᵣ und tₛₒₗₗ zu einem unerwünschten Fehler, dem sogenannten Timingfehler oder mit anderen Worten einer unerwünschten Abweichung des zum Zeitpunkt tₛₒₗₗ vorgegebenen Sollwinkels phiₛₒₗₗ, wie nachfolgend noch erläutert wird.

Die Figur 1 zeigt ein Diagramm zur Darstellung eines zeitlichen Ablaufes eines Zünd- oder Einspritzvorganges in einem Zylinder Z einer mehrere Zylinder Zₙ aufweisenden Verbrennungskraftmaschine nach dem Stand der Technik, welches eine erste Abszissenachse zur Darstellung des Kurbelwinkels °KW und auf der Ordinatenachse einen zugehörigen normalen Zylinderdruckverlauf p innerhalb eines Zylinders Z anhand einer Druck-Kennlinie K verdeutlicht, wobei der ersten Abszissenachse eine zweite Abszissenachse zugeordnet ist, welche die Zeit t und die relevanten Zeitpunkte tᵥₒᵣ und tₛₒₗₗ in Abhängigkeit eines vorgegebenen Sollwinkels phiₛₒₗₗ zum Zeitpunkt tₛₒₗₗ verdeutlicht.

Nur beispielsweise beträgt die Drehzahl des einen Zylinders Z bei einem Kurbelwinkel phiᵥₒᵣ zum Festlegungs-Zeitpunkt tᵥₒᵣ = 2000 U/min. Bisher wird, wie bereits erläutert, derart vorgegangen, dass zum Festlegungs-Zeitpunkt tᵥₒᵣ mit Kenntnis der aktuellen Drehzahl U/min = 2000 U/min, gegebenenfalls unter Verwendung eines mehrerer möglicher Drehzahlmodelle und der Kenntnis über den Kurbelwinkel phiᵥₒᵣ, der Zeitpunkt tₛₒₗₗ der Endstufe für die Einspritzung oder Zündung vom Zeitpunkt tᵥₒᵣ ausgehend - ohne weiteren Bezug auf den Sollwinkel phiₛₒₗₗ -zum Zeitpunkt tₛₒₗₗ festgelegt, mithin programmiert wird.

Dabei berücksichtigten die Drehzahlmodelle je nach Drehzahlmodell gegebenenfalls geringe Drehzahlabweichungen des einen Zylinders Z von der auslegungsbedingten Drehzahl auf verschiedene Weise modellhaft und gehen dabei jedoch weiter davon aus, dass die Drehzahl U/min zum Festlegungs-Zeitpunkt tᵥₒᵣ mit der Drehzahl zum Zeitpunkt tₛₒₗₗ übereinstimmt, sodass die Drehzahl zum Zeitpunkt tₛₒₗₗ im Wesentlichen derjenigen Drehzahl (beispielsweise 2000 U/min) zum Festlegungs-Zeitpunkt tᵥₒᵣ entspricht.

Wie eingangs erläutert, treten insbesondere bei hektischen Schaltvorgängen beim Gebrauch von Fahrzeugen mit Verbrennungskraftmaschinen, die mit handgeschalteten Getrieben gekoppelt sind, jedoch starke Drehzahländerungen (U/min zum Festlegungs-Zeitpunkt tᵥₒᵣ ≠ U/min zum Zeitpunkt tₛₒₗₗ) zwischen den Festlegungs-Zeitpunkten tᵥₒᵣ = tₛₒₗₗ auf, die von den bisher bekannten Drehzahlmodellen nicht abgebildet werden.

Ändert sich zwischen dem Festlegungs-Zeitpunkt tᵥₒᵣ und Zeitpunkt tₛₒₗₗ die Drehzahl relativ schnell, ergibt sich somit unabhängig von den bisher bekannten Drehzahlmodellen der unerwünschte Timingfehler.

Je größer die Drehzahldifferenz Δ_{U/min} des einen Zylinders Z zwischen den Zeitpunkten tᵥₒᵣ und tₛₒₗₗ, umso größer ist der entsprechende Fehler, wobei bei stark fallender Drehzahl der Druck im Zylinder Z zum Zeitpunkt tₛₒₗₗ immer weiter ansteigt (in Figur 1 nicht dargestellt) und einen unerwünschten hohen Spitzenwert annimmt.

Das liegt wie bereits ausgeführt daran, dass bei der bisherigen Praxis angenommen wird, dass die Drehzahl U/min zum Zeitpunkt tₛₒₗₗ mit der Drehzahl zum Festlegungs-Zeitpunkt tᵥₒᵣ im Wesentlichen übereinstimmt, wobei zu dem Spätest(möglichen)-Festlegungs-Zeitpunkt tᵥₒᵣ ein Zeitraum Δtᵤₙₖₒᵣᵣ (vergleiche Figur 1) festgelegt wird, nach dessen Ablauf (unter der Annahme, der im Wesentlichen übereinstimmenden Drehzahlen zu den Zeitpunkten tᵥₒᵣ und tₛₒₗₗ) der Zeitpunkt tₛₒₗₗ liegt.

Das heißt, in Abhängigkeit der Randbedingungen zum Festlegungs-Zeitpunkt tᵥₒᵣ wird in Abhängigkeit des gewünschten Sollwinkels phiₛₒₗₗ zum Zeitpunkt tₛₒₗₗ - ohne weitere Korrektur einer gegebenenfalls vorliegenden anderen Drehzahl zum Zeitpunkt tₛₒₗₗ - in nachteiliger Weise der Zeitpunkt tₛₒₗₗ festgelegt und zu diesem Zeitpunkt tₛₒₗₗ gezündet beziehungsweise eingespritzt.

Dadurch kommt es zum Zeitpunkt tₛₒₗₗ zu dem Effekt, dass bei einem unberücksichtigten starken Drehzahlabfall (mit hohem negativen Drehzahlgradienten ΔU/min) nach dem Zeitpunkt tᵥₒᵣ der gewünschte auslegungsbedingte Sollwinkel phiₛₒₗₗ nach Ablauf des Zeitraumes Δtᵤₙₖₒᵣᵣ noch nicht erreicht ist, sodass zum festgelegten Zeitpunkt tₛₒₗₗ (der den Drehzahlabfall nicht berücksichtigt) zu früh gezündet beziehungsweise eingespritzt wird, wodurch der Druck in dem mindestens einen Zylinder Z in unerwünschter Weise stark ansteigt.

Wie erläutert, ist es systembedingt nicht anders möglich, als bei der Zündung oder Einspritzung von Kraftstoff zwischen dem Festlegungs-Zeitpunkt tᵥₒᵣ und dem Zeitpunkt tₛₒₗₗ die immanent auftretenden physikalischen Verzugszeiten zu berücksichtigen, sodass der Festlegungs-Zeitpunkt tᵥₒᵣ je nach System als fester Spätest-Einspritzzeitpunkt oder der Spätest-Zündzeitpunkt feststeht.

Kern der Erfindung ist es nun, zu diesem letztmöglichen Zeitpunkt tᵥₒᵣ, in dem noch Änderungen an den Zünd- und Einspritzparametern vorgenommen werden können, zu entscheiden, ob für das anstehende Verbrennungsereignis ein Timingfehler (mit dem Potential einer Spitzendrucküberschreitung) vorliegt, wobei beim Vorliegen eines zu berücksichtigenden Timingfehlers erfindungsgemäß eine entsprechende Handlung abgeleitet und vorgeschlagen wird.

Die Figur 2 zeigt ein Diagramm zur Darstellung eines zeitlichen Ablaufes eines Zünd- oder Einspritzvorganges in dem einen Zylinder Z einer mehrere Zylinder Zₙ aufweisenden Verbrennungskraftmaschine gemäß der Erfindung, welches analog zu der Figur 1 die erste Abszissenachse zur Darstellung des Kurbelwinkels °KW und auf der Ordinatenachse den zugehörigen Druckverlauf p innerhalb des Zylinders Z anhand einer durch einen Drehzahlabfall veränderten Druck-Kennlinie K' verdeutlicht, wobei der ersten Abszissenachse die zweite Abszissenachse zugeordnet ist, welche die Zeit t und die relevanten Zeitpunkte tᵥₒᵣ₋₁, tᵥₒᵣ und t_{soll'} in Abhängigkeit eines vorgegebenen Sollwinkels phiₛₒₗₗ zum Zeitpunkt t_{soll'} verdeutlicht.

Es wird jetzt davon ausgegangen, dass sich zwischen dem Festlegungs-Zeitpunkt tᵥₒᵣ und dem Zeitpunkt tₛₒₗₗ die Drehzahl relativ schnell ändert, das heißt, mit hohem Drehzahlgradienten ΔU/min abfällt.

Entgegen der bisherigen Vorgehensweise wird der Drehzahlabfall erfindungsgemäß jetzt berücksichtigt.

Erfindungsgemäß wird die Drehzahl U/minᵥₒᵣ₋₁ desjenigen Zylinders Zₙ₋₁, der in der zeitlichen Zündreihenfolge dem betrachteten Zylinder Zₙ vorhergeht, zu einem vor dem Zeitpunkt tᵥₒᵣ liegenden Zeitpunkt tᵥₒᵣ₋₁ (vergleiche Figur 2) überwacht.

Erfindungsgemäß wird eine Korrekturgröße U/minᵥₒᵣ₋₁ in die Steuerung einbezogen.

Dabei ist vorgesehen, die lokale Drehzahl U/minᵥₒᵣ der letzten erkannten → oder einer Anzahl der letzten erkannten Zahnflanken des betrachteten Zylinders Z zum Zeitpunkt tᵥₒᵣ mit den entsprechenden Informationen des Zylinders Zₙ₋₁ zum früheren Zeitpunkt tᵥₒᵣ₋₁ zu vergleichen.

Durch diesen Vergleich kann eine Differenz D der Drehzahlen U/minᵥₒᵣ und U/minᵥₒᵣ₋₁ gebildet werden.

Dieser Differenzbetrag D wird mit einem vorgebbaren Wert aus einer applizierbaren motordrehzahlabhängigen oder motordrehzahlabhängigen und lastabhängigen Kennlinie verglichen.

Ist der Differenzbetrag D größer, als der in der Kennlinie hinterlegte Wert, wird erfindungsgemäß eine Schutzfunktion aktiviert, die nachfolgend erläutert wird.

Erfindungsgemäß wird, wenn der Differenzbetrag D kleiner ist, als der in der Kennlinie hinterlegte Wert, keine Schutzfunktion aktiviert und es wird, wie in Verbindung mit der Figur 1 beschrieben, vorgegangen.

Ein Beispiel:
Die Drehzahl U/minᵥₒᵣ des betrachteten Zylinders Zₙ zum Zeitpunkt tᵥₒᵣ beträgt beispielsweise 2000 U/min. Die U/minᵥₒᵣ₋₁ des Zylinders Zₙ₋₁ beträgt beispielsweise 2010 U/min. Der Differenzbetrag D beträgt somit 10 (= kein starker Drehzahlabfall) und ist beispielsweise kleiner, als der in der Kennlinie hinterlegte Wert, sodass erfindungsgemäß keine Schutzfunktion aktiviert wird.

Die Drehzahl U/minᵥₒᵣ des betrachteten Zylinders Z zum Zeitpunkt tᵥₒᵣ beträgt beispielsweise 2000 U/min. Die U/minᵥₒᵣ₋₁ des Zylinders Zₙ₋₁ beträgt beispielsweise 2100 U/min. Der Differenzbetrag D beträgt somit 100 (= starker Drehzahlabfall zwischen tᵥₒᵣ₋₁ und tᵥₒᵣ) und ist beispielsweise größer, als der in der Kennlinie hinterlegte Wert, sodass erfindungsgemäß die Schutzfunktion aktiviert wird. Mit anderen Worten, bei einem bestimmten in der Kennlinie hinterlegten Wert, der von dem Differenzbetrag D überschritten wird, wird davon ausgegangen, dass der Drehzahlabfall zwischen tᵥₒᵣ und tₛₒₗₗ so groß ist, dass zur Vermeidung der Spitzendruckentstehung zum Zeitpunkt tₛₒₗₗ eine Korrektur des von im Wesentlichen gleichen Drehzahlen ausgehenden Zeitraumes Δtᵤₙₖₒᵣᵣ(vergleiche Figur 1) notwendig ist.

In Figur 2 ist derjenige Zeitraum Δt_{unkorr'} zwischen tᵥₒᵣ und tₛₒₗₗ dargestellt, der nach dem Zeitpunkt tᵥₒᵣ einer stark abfallenden Drehzahl entsprechen würde.

Wie in Figur 2 dargestellt ist, würde unter Berücksichtigung des die wesentlich geringere Drehzahl berücksichtigenden Zeitraums Δt_{unkorr'} der Zeitpunkt tₛₒₗₗ zu einem wesentlich zu frühen Zeitpunkt eintreten, in dem der Sollwinkel phiₛₒₗₗ dann nicht dem gewünschten Sollwinkel entspricht, wodurch durch die zu frühe Zündung oder Einspritzung der unerwünschte Spitzendruck entsteht.

Erfindungsgemäß steht aber jetzt nach der zuvor erläuterten Aktivschaltung der Triebwerkschutzfunktion in Abhängigkeit der Drehzahl U/minᵥₒᵣ zum Zeitpunkt tᵥₒᵣ und des Differenzbetrages D der Drehzahlen U/minᵥₒᵣ und U/minᵥₒᵣ₋₁ in einem dafür in der Steuerung abgelegten Kennfeld ein Korrekturwert zur Verfügung, der als Zeitraum Δt_{offset} (vergleiche Figur 2) zur Verfügung gestellt wird, der dem Zeitraum Δt_{unkorr'} als Korrekturwert (Offset) additiv hinzugefügt wird, sodass sich ausgehend von dem Zeitpunkt tᵥₒᵣ nach Addition von Δt_{unkorr'} und Δtₒₙₛₑₜ ein Zeitpunkt t_{soll'} ergibt, in dem die Zündung oder Einspritzung vorgenommen wird.

Zu diesem Zeitpunkt t_{soll'} (mit Aktivschaltung der Triebwerksschutzfunktion) ist der Sollwinkel phiₛₒₗₗ, bei dem die Zündung oder Einspritzung analog zu der Vorgehensweise gemäß Figur 1 vorgenommen wird, bezogen auf den 360° Kurbelwinkel pro Zeiteinheit gleich dem Sollwinkel phiₛₒₗₗ zum Zeitpunkt tₛₒₗₗ (ohne Aktivschaltung der Triebwerkschutzfunktion).

Durch Vergleich der Figuren 1 und 2 wird deutlich, dass ein Arbeitsspiel des Kolbens im betrachteten Zylinder Z über den 360° Kurbelwinkel ohne Drehzahländerung kürzer ist als ein Arbeitsspiel des Kolbens des betrachteten Zylinders Z über den 360° Kurbelwinkel mit einer Reduzierung der Drehzahl.

Erfindungsgemäß ist es aufgrund der kritischen Drehzahländerung vorgesehen, dafür zu sorgen, dass der Sollwinkel phiₛₒₗₗ durch Aktivschaltung des Triebwerksschutzes an der vorgegebenen gewünschten Position °Kurbelwinkel vorOT bleibt, sodass nicht mehr in Abhängigkeit der Drehzahl zum Zeitpunkt tᵥₒᵣ der Zeitpunkt tₛₒₗₗ erreicht wird, sondern in Abhängigkeit der Drehzahl zum Zeitpunkt tᵥₒᵣ ein Zeitpunkt t_{soll'} errechnet wird, in dem der Sollwinkel phiₛₒₗₗ an der vorgegebenen gewünschten Position °Kurbelwinkel vorOT bleibt.

Mit anderen Worten, der resultierende Eingriff bei einer kritischen Drehzahländerung erfolgt in Abhängigkeit der Drehzahl U/min zum Zeitpunkt tᵥₒᵣ und in Abhängigkeit des Differenzbetrages D der Drehzahlen U/minᵥₒᵣ und U/minᵥₒᵣ₋₁ in Form einer Spätverschiebung der Zündung oder Einspritzung um den Zeitraum Δt_{offset}, der gemäß dem Kennfeld zu dem Zeitraum Δt_{unkorr'} hinzugefügt, mithin addiert wird.

Zur Reduzierung des Spitzendruckes bei Auftreten einer kritischen Drehzahländerung wird ferner vorgeschlagen, einzelne Zündungen oder Einspritzereignisse zur deaktivieren oder Einspritzmengen zu reduzieren oder eine schnelle Reduzierung des Kraftstoffdrucks über ein Druckregelventil für den Fall vorzunehmen, wenn die Einspritzung schon begonnen hat.

Zudem ist vorgesehen, dass das Kennfeld, welches bei der Aktivschaltung der Bestimmung des Zeitraumes Δt_{offnset} zur Verfügung steht, als Eingangsgrößen nicht nur die Drehzahlen und den Lastpunkt berücksichtigt, sondern dass auch der Ladedruck und/oder die Einspritzmenge und/oder das Sollmoment und/oder die Abgasrückführungs (AGR)-Rate und/oder die Betriebsart berücksichtigt wird/werden.

### Bezugszeichenliste

- Zₙ: n-ter Zylinder eines Triebwerkes
- Zₙ₋₁: Zylinder eines Triebwerkes, der in der zeitlichen Zündreihenfolge einem Zylinder Zₙ vorhergeht
- Z: betrachteter Zylinder
- tᵥₒᵣ: Spätest(möglicher)-Festlegungs-Zeitpunkt
- tᵥₒᵣ₋₁: vor tᵥₒᵣ liegender früherer Zeitpunkt
- tₛₒₗₗ: Soll-Zünd-Zeitpunkt oder Soll-Einspritz-Zeitpunkt ohne Aktivschaltung des Triebwerkschutzes
- t_{soll'}: Soll-Zünd-Zeitpunkt oder Soll-Einspritz-Zeitpunkt mit Aktivschaltung des Triebwerkschutzes
- phiᵥₒᵣ: Sollwinkel zum Zeitpunkt tᵥₒᵣ; Kurbelwinkel zum Zeitpunkt tᵥₒᵣ
- phiₛₒₗₗ: Sollwinkel zum Zeitpunkt tₛₒₗₗ; Kurbelwinkel zum Zeitpunkt tₛₒₗₗ
- Δtᵤₙₖₒᵣᵣ: unkorrigierter Zeitraum zwischen tᵥₒᵣ und tₛₒₗₗ ohne Drehzahlabfall
- Δt_{unkorr'}: unkorrigierter Zeitraum zwischen tᵥₒᵣ und tsoll unter Berücksichtigung eines starken Drehzahlabfalls
- Δt_{offset}: Korrekturwert (Offset)
- Δtₖₒᵣᵣ: korrigierter Zeitraum zwischen tvor und t_{soll'} (Δt_{unkorr'} + Δt_{offset})
- U/minᵥₒᵣ: Drehzahl zum Zeitpunkt tᵥₒᵣ
- U/minᵥₒᵣ₋₁: Drehzahl zum Zeitpunkt tᵥₒᵣ₋₁
- ΔU/min: Drehzahlgradient
- D: Differenzbetrag zwischen U/minᵥₒᵣ₋₁ und U/minᵥₒᵣ
- °KW: Grad Kurbelwinkel
- K: Druck-Kennlinie ohne Aktivschaltung des Triebwerkschutzes
- K': Druck-Kennlinie mit Aktivschaltung des Triebwerkschutzes
- p: Druck
- t: Zeit

## Patentansprüche

1. Verfahren zum Betreiben einer Verbrennungskraftmaschine eines Kraftfahrzeuges, bei dem Kraftstoff in einen Brennraum eines von mehreren betrachteten Zylindern (Z; Zₙ) in Abhängigkeit eines vorgebbaren Sollwinkels (phiₛₒₗₗ) eines rotierenden Bauteils der Verbrennungskraftmaschine, der mit dem Kurbelwinkel (°KW) einer Kurbelwelle der Verbrennungskraftmaschine korrespondiert, zu einem Zünd- und/oder Einspritz-Zeitpunkt (tₛₒₗ) gezündet und/oder eingespritzt wird,
- wobei der Zünd- und/oder Einspritz-Zeitpunkt (tₛₒₗₗ) zu einem spätesten Festlegungs-Zeitpunkt (tᵥₒᵣ) unter Kenntnis über den Sollwinkel (phiᵥₒᵣ) und die aktuelle Drehzahl (U/minᵥₒᵣ) des einen der mehreren Zylinder (Z; Zₙ) zum spätesten Festlegungs-Zeitpunkt (tᵥₒᵣ) festgelegt wird,
- wobei zu dem spätesten Festlegungs-Zeitpunkt (tᵥₒᵣ) entschieden wird, ob zwischen dem spätesten Festlegungs-Zeitpunkt (tᵥₒᵣ) und dem Zünd- und/oder Einspritz-Zeitpunkt (tₛₒₗₗ) eine nach dem spätesten Festlegungs-Zeitpunkt (tᵥₒᵣ) stattfindende Änderung der Drehzahl zu einer Verschiebung des Zünd- und/oder Einspritz-Zeitpunktes (tₛₒₗₗ) führt, - indem eine Drehzahl (U/minᵥₒᵣ₋₁) desjenigen Zylinders (Zₙ₋₁), der in der zeitlichen Zündreihenfolge dem einen betrachteten Zylinder (Z) vorhergeht, zu einem vor dem spätesten Festlegungs-Zeitpunkt (tᵥₒᵣ) liegenden früheren Zeitpunkt (tᵥₒᵣ₋₁) überwacht und eine lokale Drehzahl (U/minᵥₒᵣ) des einen betrachteten Zylinders (Z) zum spätesten Festlegungs-Zeitpunkt (tᵥₒᵣ) und die lokale Drehzahl (U/minᵥₒᵣ₋₁) des vorhergehenden Zylinders (Zₙ₋₁) ermittelt und ein Drehzahlabfall berücksichtigt wird,
- wobei ein negativer Drehzahlgradient (ΔU/min) ermittelt wird, der einen Differenzbetrag (D) der Drehzahlen (U/minᵥₒᵣ) zum spätesten Festlegungs-Zeitpunkt (tᵥₒᵣ) und (U/minᵥₒᵣ₋₁) zum früheren Festlegungs-Zeitpunkt (tᵥₒᵣ₋₁) repräsentiert,
- wobei die Drehzahl (U/minᵥₒᵣ₋₁) zum früheren Zeitpunkt (tᵥₒᵣ₋₁) als Korrekturgröße in die Steuerung einbezogen wird,
- wobei die lokale Drehzahl (U/minᵥₒᵣ) der letzten erkannten Zahnflanke oder einer Anzahl der letzten erkannten Zahnflanken des betrachteten Zylinders (Z) zum spätesten Festlegungs-Zeitpunkt (tᵥₒᵣ) mit den entsprechenden Informationen des vorhergehenden Zylinders (Zₙ₋₁) zum früheren Zeitpunkt (tᵥₒᵣ₋₁) verglichen und der Differenzbetrag (D) der Drehzahlen (U/minᵥₒᵣ, U/minᵥₒᵣ₋₁) zum spätesten Festlegungs-Zeitpunkt (tᵥₒᵣ) und zum früheren Zeitpunkt (tᵥₒᵣ₋₁) gebildet wird, wobei das Überschreiten eines vorgebbaren Drehzahlgradienten (ΔU/min) zwischen den Zeitpunkten (tᵥₒᵣ, tᵥₒᵣ₋₁) zu einer Aktivschaltung einer Schutzfunktion führt, wenn der Differenzbetrag (D) größer ist, als der in einer applizierbaren motordrehzahlabhängigen Kennlinie oder einer motordrehzahlabhängigen und lastabhängigen Kennlinie hinterlegte Wert,
- wobei innerhalb der Schutzfunktion in Abhängigkeit des ermittelten negativen Drehzahlgradienten (ΔU/min) eine Korrektur des ohne Aktivschaltung festgelegten Zünd- und/oder Einspritz-Zeitpunktes (tₛₒₗₗ) unter Festlegung eines korrigierten Zünd- und/oder Einspritz-Zeitpunktes (t_{soll'}) erfolgt, sodass zu dem korrigierten Zünd- und/oder Einspritz-Zeitpunkt (t_{soll'}) trotz der Drehzahländerung der vorgegebene Sollwinkel (phiₛₒₗₗ) beibehalten wird.

2. Verfahren nach Anspruch 1, **dadurch gekennzeichnet, dass** die Korrektur nach der Aktivschaltung der Schutzfunktion mittels eines Kennfeldes, neben der Abhängigkeit von der Drehzahl mittels des negativen Drehzahlgradienten (ΔU/min), zudem
• in Abhängigkeit eines Lastpunktes der Verbrennungskraftmaschine und/oder
• in Abhängigkeit eines Ladedrucks eines Abgasturboladers und/oder
• in Abhängigkeit einer Einspritzmenge und/oder
• eines Sollmomentes der Verbrennungskraftmaschine und/oder
• in Abhängigkeit einer Abgasrückführungs-Rate (AGR) einer Abgasrückführung und/oder
• in Abhängigkeit einer Betriebsart der Verbrennungskraftmaschine vorgenommen wird.

3. Verfahren nach Anspruch 1, **dadurch gekennzeichnet, dass** in Abhängigkeit der Drehzahl (U/minᵥₒᵣ) zum Festlegungs-Zeitpunkt (tᵥₒᵣ) und des Differenzbetrages (D) der Drehzahlen (U/minᵥₒᵣ) und (U/minᵥₒᵣ₋₁) in einem dafür in der Steuerung abgelegten Kennfeld ein Korrekturwert zur Verfügung gestellt wird, der als Zeitraum (Δt_{offset}) ausgebildet wird, der einem Zeitraum (Δt_{unkorr'}) additiv hinzugefügt wird, welcher der Drehzahl zum Festlegungs-Zeitpunkt (tᵥₒᵣ) entspricht, sodass sich ausgehend von dem Festlegungs-Zeitpunkt (tᵥₒᵣ) nach Addition der Zeiträume (Δt_{unkorr'}) und (Δtₒᵣᵣₛₑₜ) der korrigierte Zünd- und/oder Einspritz-Zeitpunkt (t_{soll'}) berechnet wird, in dem die Zündung oder Einspritzung vorgenommen wird, sodass trotz der Drehzahländerung derjenige vorgegebene Sollwinkel (phiₛₒₗₗ) beibehalten wird, der auch ohne Aktivschaltung der Schutzfunktion zum Zünd- und/oder Einspritz-Zeitpunkt (tₛₒₗₗ) erreicht wird.

4. Verfahren nach Anspruch 1, **dadurch gekennzeichnet, dass** bei einer Aktivschaltung der Schutzfunktion zusätzlich
• einzelne Zündungen oder Einspritzereignisse deaktiviert werden und/oder
• Einspritzmengen reduziert werden und/oder
• eine Reduzierung des Kraftstoffdrucks über ein Druckregelventil innerhalb eines Zünd- und/oder Einspritzsystems vorgenommen wird, wenn die Einspritzung bereits begonnen hat.

5. Motor-Steuergerät eines Zünd- und/oder Einspritzsystems, in dem ein computerlesbarer Programmalgorithmus zur Ausführung des Verfahrens nach einem der Ansprüche 1 bis 4 gespeichert ist.

6. Kraftfahrzeug mit einem Motor-Steuergerät nach Anspruch 5.

## Claims

1. Method for operating an internal combustion engine of a motor vehicle, in which method, at an ignition and/or injection time (tₛₒₗₗ), fuel is ignited in and/or injected into a combustion chamber of one of a plurality of considered cylinders (Z; Zₙ) on the basis of a predefinable target angle (phiₛₒₗₗ) for a rotating component of the internal combustion engine that corresponds to the crank angle (°KW) of a crankshaft of the internal combustion engine,
- wherein the ignition and/or injection time (tₛₒₗₗ) is determined at a latest determination time (tᵥₒᵣ) with knowledge of the target angle (phiᵥₒᵣ) and the current speed (U/minᵥₒᵣ) of the one of the plurality of cylinders (Z; Zₙ) at the latest determination time (tᵥₒᵣ),
- wherein at the latest determination time (tᵥₒᵣ) it is decided whether, between the latest determination time (tᵥₒᵣ) and the ignition and/or injection time (tₛₒₗₗ), a change in the speed that occurs after the latest determination time (tᵥₒᵣ) will lead to a shift in the ignition and/or injection time (tₛₒₗₗ) - by monitoring a speed (U/minᵥₒᵣ₋₁) of the cylinder (Zₙ₋₁) preceding the one considered cylinder (Z) in the chronological firing order at an earlier time (tᵥₒᵣ₋₁) before the latest determination time (tᵥₒᵣ) and ascertaining a local speed (U/minᵥₒᵣ) of the one considered cylinder (Z) at the latest determination time (tᵥₒᵣ) and the local speed (U/minᵥₒᵣ₋₁) of the preceding cylinder (Zₙ₋₁) and taking a speed drop into account,
- wherein a negative speed gradient (ΔU/min) is ascertained which represents a difference (D) between the speed (U/minᵥₒᵣ) at the latest determination time (tᵥₒᵣ) and the speed (U/minᵥₒᵣ₋₁) at the earlier determination time (tᵥₒᵣ₋₁),
- wherein the speed (U/minᵥₒᵣ₋₁) at the earlier time (tᵥₒᵣ₋₁) is included in the control system as a correction variable,
- wherein the local speed (U/minᵥₒᵣ) of the last detected tooth flank or of a number of last detected tooth flanks of the considered cylinder (Z) at the latest determination time (tᵥₒᵣ) is compared with the corresponding information about the preceding cylinder (Zₙ₋₁) at the earlier time (tᵥₒᵣ₋₁), and the difference (D) between the speeds (U/minᵥₒᵣ, U/minᵥₒᵣ₋₁) at the latest determination time (tᵥₒᵣ) and at the earlier time (tᵥₒᵣ₋₁) is calculated, wherein exceeding a predefinable speed gradient (ΔU/min) between the times (tᵥₒᵣ, tᵥₒᵣ₋₁) leads to a protection function being activated if the difference (D) is greater than the value stored in an applicable characteristic curve that is dependent on the engine speed or in a characteristic curve that is dependent on the engine speed and the load,
- wherein, within the protection function, the ignition and/or injection time (tₛₒₗₗ) determined without activation is corrected on the basis of the ascertained negative speed gradient (ΔU/min) by determining a corrected ignition and/or injection time (t_{soll'}), with the result that the predefined target angle (phiₛₒₗₗ) is maintained at the corrected ignition and/or injection time (t_{soll'}) despite the speed change.

2. Method according to claim 1, **characterized in that** the correction is performed, after the protection function has been activated, by means of a characteristic map, not only on the basis of the speed by means of the negative speed gradient (ΔU/min), but also in addition
• on the basis of a load point of the internal combustion engine and/or
• on the basis of a boost pressure of an exhaust gas turbocharger and/or
• on the basis of an injection quantity and/or
• a target torque for the internal combustion engine and/or
• on the basis of an exhaust gas recirculation (EGR) rate of an exhaust gas recirculation system and/or
• on the basis of an operating mode of the internal combustion engine.

3. Method according to claim 1, **characterized in that** a correction value is provided, on the basis of the speed (U/minᵥₒᵣ) at the determination time (tᵥₒᵣ) and of the difference (D) between the speed (U/minᵥₒᵣ) and the speed (U/minᵥₒᵣ₋₁), in a characteristic map stored in the control system for this purpose, which value is configured as a time period (Δt_{offse}t) that is additively added to a time period (Δt_{unkorr'}) corresponding to the speed at the determination time (tᵥₒᵣ), with the result that, starting from the determination time (tᵥₒᵣ), the corrected ignition and/or injection time (t_{soll'}) at which the ignition or injection is performed is calculated after adding the time period (Δt_{unkorr'}) and the time period (Δt_{offset}), with the result that the predefined target angle (phiₛₒₗₗ) which is also achieved without activating the protection function at the ignition and/or injection time (tₛₒₗₗ) is maintained despite the speed change.

4. Method according to claim 1, **characterized in that** when the protection function is activated, the following is additionally carried out:
• individual ignitions or injection events are deactivated and/or
• injection quantities are reduced and/or
• the fuel pressure is reduced via a pressure regulating valve within an ignition and/or injection system if injection has already started.

5. Engine control unit for an ignition and/or injection system, in which unit a computer-readable program algorithm for carrying out the method according to any of claims 1 to 4 is stored.

6. Motor vehicle comprising an engine control unit according to claim 5.

## Revendications

1. Procédé de fonctionnement d'un moteur à combustion interne d'un véhicule automobile, dans lequel du carburant est allumé et/ou injecté dans une chambre de combustion de l'un de plusieurs cylindres (Z ; Zₙ) considérés, en fonction d'un angle de consigne (phiₛₒₗₗ) pouvant être prédéterminé d'un composant rotatif du moteur à combustion interne, qui correspond à l'angle de vilebrequin (°KW) d'un vilebrequin du moteur à combustion interne, à un instant d'allumage et/ou d'injection (tₛₒₗₗ),
- dans lequel l'instant d'allumage et/ou d'injection (tₛₒₗₗ) est déterminé à un instant de détermination le plus tardif (tᵥₒᵣ) en connaissant l'angle de consigne (phiᵥₒᵣ) et la vitesse de rotation actuelle (U/minᵥₒᵣ) de l'un des plusieurs cylindres (Z ; Zₙ) à l'instant de détermination le plus tardif (tᵥₒᵣ),
- dans lequel, à l'instant de détermination le plus tardif (tᵥₒᵣ), il est décidé si, entre l'instant de détermination le plus tardif (tᵥₒᵣ) et l'instant d'allumage et/ou d'injection (tₛₒₗₗ), une modification de la vitesse de rotation ayant lieu après l'instant de détermination le plus tardif (tᵥₒᵣ) entraîne un décalage de l'instant d'allumage et/ou d'injection (tₛₒₗₗ), - en ce qu'une vitesse de rotation (U/minᵥₒᵣ₋₁) du cylindre (Zₙ₋₁), qui précède le cylindre (Z) considéré dans l'ordre chronologique d'allumage, à un instant antérieur (tᵥₒᵣ₋₁) situé avant l'instant de détermination le plus tardif (tᵥₒᵣ), est surveillée, et une vitesse de rotation locale (U/minᵥₒᵣ) du cylindre (Z) considéré à l'instant de détermination le plus tardif (tᵥₒᵣ) et la vitesse de rotation locale (U/minᵥₒᵣ₋₁) du cylindre (Zₙ₋₁) précédent sont établies et une chute de la vitesse de rotation est prise en compte,
- dans lequel un gradient de vitesse négatif (ΔU/min) est établi, lequel représente une quantité de différence (D) des vitesses de rotation (U/minᵥₒᵣ) à l'instant de détermination le plus tardif (tᵥₒᵣ) et (U/minᵥₒᵣ₋₁) à l'instant de détermination antérieur (tᵥₒᵣ₋₁),
- dans lequel la vitesse de rotation (U/minᵥₒᵣ₋₁) à l'instant antérieur (tᵥₒᵣ₋₁) est intégrée dans la commande en tant que variable de correction,
- dans lequel la vitesse de rotation locale (U/minᵥₒᵣ) du dernier flanc de dent reconnu ou d'un nombre des derniers flancs de dent reconnus du cylindre (Z) considéré à l'instant de détermination le plus tardif (tᵥₒᵣ) est comparée aux informations correspondantes du cylindre précédent (Zₙ₋₁) à l'instant antérieur (tᵥₒᵣ₋₁) et la quantité de différence (D) des vitesses de rotation (U/minᵥₒᵣ, U/minᵥₒᵣ₋₁) à l'instant de détermination le plus tardif (tᵥₒᵣ) et à l'instant antérieur (tᵥₒᵣ₋₁) est formée, dans lequel le dépassement d'un gradient de vitesse de rotation (ΔU/min) pouvant être prédéfini entre les instants (tᵥₒᵣ, tᵥₒᵣ₋₁) conduisant à une commutation active d'une fonction de protection lorsque la quantité de différence (D) est supérieure à la valeur enregistrée dans une courbe caractéristique pouvant être appliquée et dépendant de la vitesse de rotation du moteur ou dans une courbe caractéristique dépendant de la vitesse de rotation du moteur et de la charge,
- dans lequel une correction de l'instant d'allumage et/ou d'injection (tₛₒₗₗ) déterminé sans commutation active est effectuée à l'intérieur de la fonction de protection en fonction du gradient de vitesse de rotation négatif (ΔU/min) établi, en déterminant un instant d'allumage et/ou d'injection corrigé (tt_{soll'}), de sorte qu'à l'instant d'allumage et/ou d'injection corrigé (t_{tsoll'}), l'angle de consigne (phiₛₒₗₗ) prédéfini est maintenu malgré la variation de vitesse de rotation.

2. Procédé selon la revendication 1, **caractérisé en ce que** la correction après la commutation active de la fonction de protection par le biais d'un diagramme caractéristique, outre la dépendance à la vitesse de rotation par le biais du gradient de vitesse de rotation négatif (ΔU/min), est effectuée en outre
• en fonction d'un point de charge du moteur à combustion interne et/ou
• en fonction d'une pression de suralimentation d'un turbocompresseur à gaz d'échappement et/ou
• en fonction d'un débit d'injection et/ou
• d'un couple de consigne du moteur à combustion interne et/ou
• en fonction d'un taux de recyclage des gaz d'échappement (EGR) d'un système de recyclage des gaz d'échappement et/ou
• en fonction d'un mode de fonctionnement du moteur à combustion interne

3. Procédé selon la revendication 1, **caractérisé en ce que,** en fonction de la vitesse de rotation (U/minᵥₒᵣ) à l'instant de détermination (tᵥₒᵣ) et de la quantité de différence (D) entre les vitesses de rotation (U/minᵥₒᵣ) et (U/minᵥₒᵣ₋₁), une valeur de correction est mise à disposition dans un champ caractéristique stocké à cet effet dans la commande, laquelle valeur de correction est réalisée sous la forme d'une période (Δt_{offset}) qui est ajoutée par addition à une période (Δt_{unkorr'}) qui correspond à la vitesse de rotation à l'instant de détermination (tᵥₒᵣ), de sorte qu'à partir de l'instant de détermination (tᵥₒᵣ), après addition des périodes (Δt_{unkorr'}) et (Δt_{offset}), l'instant d'allumage et/ou d'injection corrigé (t_{soll'}) est calculé, auquel l'allumage ou l'injection est effectué(e), de sorte que, malgré la modification de vitesse de rotation, l'angle de consigne prédéterminé (phiₛₒₗₗ) qui est atteint même sans commutation active de la fonction de protection à l'instant d'allumage et/ou d'injection (tₛₒₗₗ) est maintenu.

4. Procédé selon la revendication 1, **caractérisé en ce que,** lors d'une commutation active de la fonction de protection, en plus
• des allumages ou des événements d'injection individuels sont désactivés et/ou
• des quantités injectées sont réduites et/ou
• une réduction de la pression de carburant est effectuée par l'intermédiaire d'une soupape de régulation de pression à l'intérieur d'un système d'allumage et/ou d'injection lorsque l'injection a déjà commencé.

5. Appareil de commande de moteur d'un système d'allumage et/ou d'injection, dans lequel est mémorisé un algorithme de programme lisible par ordinateur pour l'exécution du procédé selon l'une des revendications 1 à 4.

6. Véhicule automobile comportant un appareil de commande de moteur selon la revendication 5.
